# EUROPEAN PATENT APPLICATION

(11) **EP 4 355 011 A1**
(43) Date of publication of application: **17.04.2024**
(21) Application number: 22847929.1
(22) Date of filing: 06.05.2022
(51) Int. Cl.: H04W 76/10

(54) **COMMUNICATION METHOD AND RELATED APPARATUS**

(30) Priority: 30.07.2021 CN 202110871898
(71) Applicant: Huawei Technologies Co., Ltd., Longgang Shenzhen, Guangdong 518129 (CN)
(72) Inventor: CAO, Longyu, Shenzhen, Guangdong 518129 (CN); WANG, Yaoguang, Shenzhen, Guangdong 518129 (CN); YU, Yijun, Shenzhen, Guangdong 518129 (CN)
(74) Representative: Pfenning, Meinig & Partner mbB
(86) International application number: PCT/CN2022/091217
(87) International publication number: WO 2023/005314

(57) **Abstract**

This application discloses a communication method and a related apparatus in the field of wireless communication technologies. In the technical solutions provided in this application, an access network device sends a first request message to a control plane network element of a core network, where the first request message includes a first identifier, the first identifier indicates a user equipment management service, and the first request message is used to request to establish a PDU session for the user equipment management service. The control plane network element of the core network configures an IP address of user equipment, a QoS flow identifier, and first indication information based on the first request message, where the first indication information indicates to establish a user equipment management channel. The control plane network element of the core network sends a second request message to the access network device, where the second request message is used to request resource information for establishing the PDU session, and the second request message includes the IP address of the user equipment, the QoS flow identifier, and the first indication information, and the access network device constructs user equipment management channel information based on the second request message. This reduces user equipment management costs.

## Description

This application claims priority to Chinese Patent Application No. 202110871898.X, filed with the China National Intellectual Property Administration on July 30, 2021 and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

In an application scenario of 5th generation (5th generation, 5G) mobile communication, user equipment (user equipment, UE) is usually connected to a new radio (new radio, NR) base station of a 5G network through customer premises equipment (customer premises equipment, CPE) or a road side unit (road side unit, RSU), and then the CPE or the RSU is connected to the 5G network of an operator through NR base station. Therefore, the CPE or the RSU is a key network device node for UE service assurance.

In the conventional technologies, a user equipment management system (UE management system) implements management on UE (including user equipment such as CPE or an RSU, where unless otherwise specified below, the UE represents the user equipment such as the CPE or the RSU) based on a data plane path of a 3rd generation partnership project (3rd generation partnership project, 3GPP) network. Specifically, after the UE is attached to the 5G network, the 5G network establishes, for the UE, a protocol data unit (protocol data unit, PDU) session dedicated to UE management data transmission. The PDU session is different from a PDU session for normal service data transmission of the UE. For example, the two PDU sessions correspond to different access point name (access point name, APN) identifiers or data network name (data network name DNN) identifiers.

However, an existing UE management method depends on end-to-end (end-to-end, E2E) network resources, and a large quantity of network resources are consumed. This increases network construction and maintenance costs. Therefore, how to reduce UE management costs becomes an urgent problem to be resolved.

### SUMMARY

This application provides a communication method and a related apparatus, to reduce user equipment management costs.

According to a first aspect, this application provides a communication method, where the method is performed by a control plane network element of a core network, and the method includes: receiving a first request message, where the first request message includes a first identifier, the first identifier indicates a user equipment management service, and the first request message is used to request to establish a packet data unit PDU session for the user equipment management service; configuring an internet protocol IP address of user equipment, a quality of service QoS flow identifier, and first indication information based on the first request message, and skipping establishing an N4 session, where the first indication information indicates an access network device to establish the user equipment management channel; and sending a second request message, where the second request message is used to request resource information for establishing the PDU session, and the second request message includes the IP address of the user equipment, the QoS flow identifier, and the first indication information.

According to this method, the control plane network element of the core network identifies a service type of the UE as the user equipment management service based on the first identifier in the received first request message; then configures the IP address of the UE, the QoS flow identifier, and the first indication information, where the first indication information indicates to establish the user equipment management channel; and sends the second request message to request the resource information for establishing the PDU session, and skips establishing an N4 session. A data plane path of a 5G network is no longer established for user equipment management data transmission. This reduces user equipment management costs.

According to a second aspect, this application provides a communication method, where the method is performed by an access network device, and the method includes: sending a first request message to a control plane network element of a core network, where the first request message includes a first identifier, the first identifier indicates a user equipment management service, and the first request message is used to request to establish a packet data unit PDU session for the user equipment management service; receiving a second request message from the control plane network element of the core network, where the second request message is used to request resource information for establishing the PDU session, the second request message includes an internet protocol IP address of user equipment, a quality of service QoS flow identifier, and first indication information, and the first indication information indicates the access network device to construct the user equipment management channel; assigning a data radio bearer identifier DRB ID based on the second request message; and constructing user equipment management channel information based on the first indication information, where the user equipment management channel information includes a correspondence between the IP address of the user equipment and the QoS flow identifier, a correspondence between an IP address of an element management system EMS and the QoS identifier, and a correspondence between an IP address of the DRB and the QoS flow identifier.

According to this method, the access network device sends, to the control plane network element of the core network, the first request message carrying the first identifier, receives the second request message from the control plane network element of the core network, and constructs the user equipment management channel information based on the second request message. This reduces user equipment management costs.

In a possible implementation, the access network device includes a central unit-control plane CU-CP and a central unit-user plane CU-UP; and correspondingly, the method further includes: The CU-CP sends the first request message to the control plane network element of the core network. The CU-CP receives the second request message from the control plane network element of the core network. The CU-CP sends a third request message to the CU-UP, where the third request message includes the IP address of the user equipment, the QoS flow identifier, and the first indication information. The CU-UP configures the DRB ID based on the third request message. The CU-UP constructs the user equipment management channel information based on the first indication message.

In a possible implementation, the method further includes: receiving uplink user equipment management data from the user equipment by using the DRB; sending the uplink user equipment management data to the EMS based on the user equipment management channel information; receiving downlink user equipment management data from the EMS; and sending the downlink user equipment management data to the user equipment by using the DRB.

According to a third aspect, this application provides a communication method, where the method is performed by an access network device, and the method includes: receiving first request information, device identification information of user equipment, and registration information of the user equipment, where the first request information is used to request a registration procedure of the user equipment; establishing a correspondence between an identifier ID of the user equipment and an IP address of an element management system EMS based on the first request information and the device identification information of the user equipment; and sending the first request information, the registration information of the user equipment, and an IP address of the access network device to the EMS.

According to this method, the access network device establishes the correspondence between the ID of the user equipment and the IP address of the EMS based on the received first request information and the received device identification information of the user equipment, and sends the first request information, the registration information of the user equipment, and the IP address of the access network device to the EMS. This reduces user equipment management costs.

In a possible implementation, the registration information of the user equipment includes any one of the following: encapsulated registration information of the user equipment, information element parameter information of the user equipment, or an information element parameter container of the user equipment.

In a possible implementation, the access network device includes a central unit-control plane CU-CP and a distributed unit DU; and correspondingly, the method further includes: The DU receives the first request information, the device identification information of the user equipment, and the registration information of the user equipment from the user equipment. The DU sends a first transfer message to the CU-CP, where the first transfer message includes the first request information, the device identification information of the user equipment, and the registration information of the user equipment. The CU-CP establishes the correspondence between the ID of the user equipment and the IP address of the EMS based on the first request information and the device identification information of the user equipment. The CU-CP sends the first request information, the registration information of the user equipment, and an IP address of the CU-CP to the EMS.

In a possible implementation, the method further includes: receiving uplink user equipment management data from the user equipment by using a signaling radio bearer SRB; sending the uplink user equipment management data to the EMS based on the correspondence between the ID of the user equipment and the IP address of the EMS; receiving downlink user equipment management data from the EMS; and sending the downlink user equipment management data to the user equipment by using the SRB.

According to a fourth aspect, this application provides a communication method, where the method is performed by an element management system EMS, and the method includes: receiving first request information, registration information of user equipment, and an internet protocol IP address of an access network device, where the first request information is used to request a registration procedure of the user equipment; and registering the user equipment based on the first request information.

According to this method, the EMS registers the user equipment based on the received first request information, the received registration information of the user equipment, and the received IP address of the access network device. This avoids allocating resources on a UPF for user equipment management data processing, reduces consumption of core network resources, and reduces user equipment management costs.

In a possible implementation, the IP address of the access network device includes an IP address of a central unit-control plane CU-CP.

In a possible implementation, the method further includes: receiving uplink user equipment management data from the access network device; recording a correspondence between an identifier ID of the user equipment and an ID of the access network device; performing a user equipment management service based on the uplink user management data; and sending downlink user equipment management data to the access network device based on the correspondence between the ID of the user equipment and the ID of the access network device.

According to a fifth aspect, this application provides a communication apparatus. The apparatus may include modules configured to implement the method according to the first aspect, and the modules may be implemented by using software and/or hardware.

According to a sixth aspect, this application provides a communication apparatus. The apparatus may include modules configured to implement the method according to the second aspect, and the modules may be implemented by using software and/or hardware.

According to a seventh aspect, this application provides a communication apparatus. The apparatus may include modules configured to implement the method according to the third aspect, and the modules may be implemented by using software and/or hardware.

According to an eighth aspect, this application provides a communication apparatus. The apparatus may include modules configured to implement the method according to the fourth aspect, and the modules may be implemented by using software and/or hardware.

According to a ninth aspect, this application provides a communication apparatus. The apparatus may include a processor coupled to a memory. The memory is configured to store program code, and the processor is configured to execute the program code in the memory, to implement the method according to any one of the first aspect, the second aspect, the third aspect, the fourth aspect, or the implementations of the first aspect, the second aspect, the third aspect, or the fourth aspect.

Optionally, the apparatus may further include the memory.

According to a tenth aspect, this application provides a chip, including at least one processor and a communication interface. The communication interface and the at least one processor are interconnected through a line. The at least one processor is configured to run a computer program or instructions, to perform the method according to any one of the first aspect, the second aspect, the third aspect, the fourth aspect, or the possible implementations of the first aspect, the second aspect, the third aspect, or the fourth aspect.

According to an eleventh aspect, this application provides a computer-readable medium. The computer-readable medium stores program code executed by a device. The program code includes instructions used to perform the method according to any one of the first aspect, the second aspect, the third aspect, the fourth aspect, or the possible implementations of the first aspect, the second aspect, the third aspect, or the fourth aspect.

According to a twelfth aspect, this application provides a computer program product including instructions. When the computer program product runs on a computer, the computer is enabled to perform the method according to any one of the first aspect, the second aspect, the third aspect, the fourth aspect, or the possible implementations of the first aspect, the second aspect, the third aspect, or the fourth aspect.

According to a thirteenth aspect, this application provides a computing device, including at least one processor and a communication interface. The communication interface and the at least one processor are interconnected through a line. The communication interface is used for communicating with a target system. The at least one processor is configured to run a computer program or instructions, to perform the method according to any one of the first aspect, the second aspect, the third aspect, the fourth aspect, or the possible implementations of the first aspect, the second aspect, the third aspect, or the fourth aspect.

According to a fourteenth aspect, this application provides a computing system, including at least one processor and a communication interface. The communication interface and the at least one processor are interconnected through a line. The communication interface is used for communicating with a target system. The at least one processor is configured to run a computer program or instructions, to perform the method according to any one of the first aspect, the second aspect, the third aspect, the fourth aspect, or the possible implementations of the first aspect, the second aspect, the third aspect, or the fourth aspect.

### BRIEF DESCRIPTION OF DRAWINGS

FIG. 1 is a schematic diagram of a system architecture according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic diagram of another system architecture according to an embodiment of this application;
FIG. 6A and FIG. 6B are a schematic flowchart of yet another communication method according to an embodiment of this application;
FIG. 7 is a schematic flowchart of still yet another communication method according to an embodiment of this application;
FIG. 8 is a schematic flowchart of a further communication method according to an embodiment of this application;
FIG. 9 is a schematic diagram of a structure of a communication apparatus according to an embodiment of this application;
FIG. 10 is a schematic diagram of a structure of a communication apparatus according to another embodiment of this application;
FIG. 11 is a schematic diagram of a structure of a communication apparatus according to still another embodiment of this application;
FIG. 12 is a schematic diagram of a structure of a communication apparatus according to yet another embodiment of this application; and
FIG. 13 is a schematic diagram of a structure of a communication apparatus according to still yet another embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

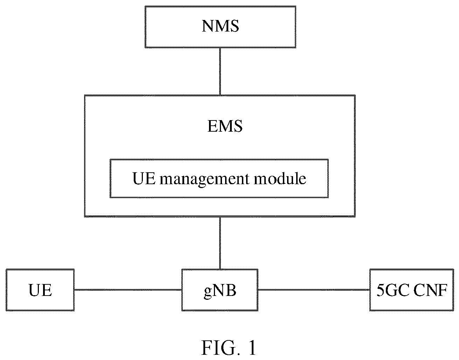

FIG. 1 is a schematic diagram of a system architecture according to an embodiment of this application. As shown in FIG. 1, the system architecture in this embodiment of this application includes a network management system (network management system, NMS), an element management system (element management system, EMS), UE, a 5G base station (generation NodeB, gNB), and a control plane network element of a 5G core network.

The UE may be any user equipment that can provide a radio network access function to another common user equipment. For example, the UE includes CPE or an RSU.

The gNB is a radio access network base station of a 5G NR network and is mainly configured to provide a radio network access function. For example, the radio network access function provided by the gNB includes radio resource connection (radio resource control, RRC) connection management, security management, user data forwarding, data packet reassembly/fragmentation, retransmission, and the like.

The control plane network element of the 5G core network indicates all control plane network elements of the 5G core network. For example, the control plane network element of the 5G core network includes an access and mobility management function (access and mobility management function, AMF) network element, a session management function (session management function, SMF) network element, a network exposure function (network exposure function, NEF) network element, and a network data analytics function (network data analytics function, NWDAF) network element, and the like. Different control plane network elements of the 5G core network are responsible for different network functions. For example, the AMF is mainly responsible for functions such as authentication and location tracking of UE; the SMF mainly provides session management functions such as internet protocol (internet protocol, IP) address assignment of UE, quality of service (quality of service, QoS) management; the NEF mainly provides a function of exposing a 3GPP network to an external service entity; and the NWDAF mainly provides a data analysis function of the 5G core network.

It should be noted that the control plane network element of the 5G core network may include more types of network elements and more functions. For details, refer to descriptions in clause 6.2 of 3GPP TS 23.501. The details are not described herein.

The EMS is configured to perform management on a radio access network device. For example, management performed by the EMS on the radio access network device includes parameter configuration, performance management, fault alarming, and the like of a network element. The EMS includes a UE management (management) module. Main functions of the module include registration, parameter configuration, software upgrade, fault diagnosis, status and performance monitoring, and the like of user equipment such as CPE or an RSU.

The NMS is a management system, in an operator network, that provides network device management across domains (for example, across a radio access network and a core network) or across device vendors. Specific functions of the NMS include parameter configuration, performance monitoring, fault alarming, and the like of a network device.

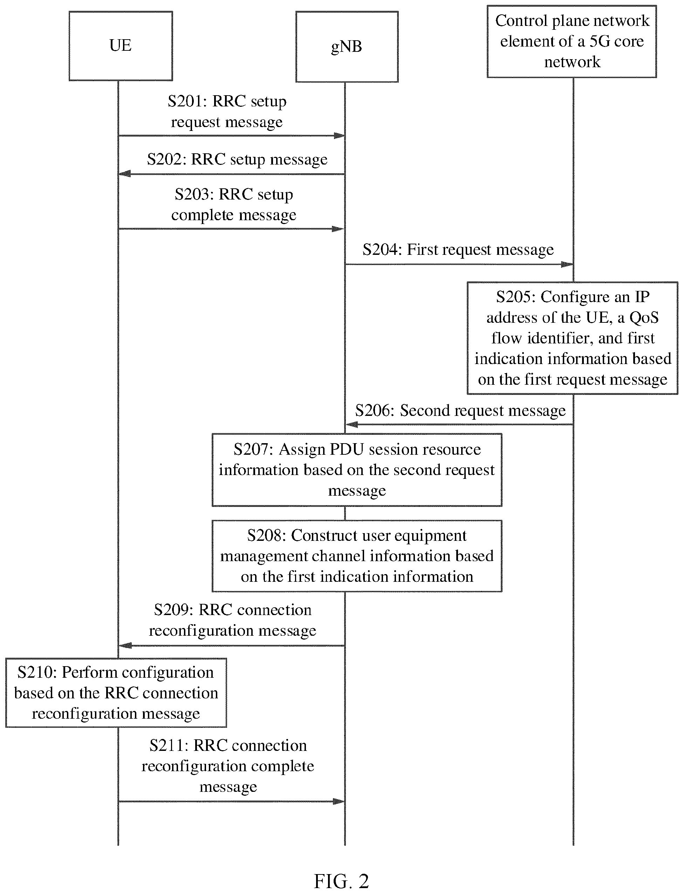

FIG. 2 is a schematic flowchart of a communication method according to an embodiment of this application. As shown in FIG. 2, the method includes at least S201 to S211.

S201: UE sends an RRC setup request (RRC setup request) message to a gNB.

S202: The gNB sends an RRC setup (RRC setup) message to the UE.

S203: The UE sends an RRC setup complete (RRC setup complete) message to the gNB.

S201 to S203 are an RRC connection establishment procedure. After the UE is powered on, the UE searches for a radio signal of a radio network base station, then selects and determines, based on a cell selection policy, a cell to camp on, and establishes an RRC connection to a radio network base station corresponding to the cell.

It should be noted that the RRC connection establishment procedure is performed according to a procedure in a 3GPP standard protocol. For detailed descriptions of the procedure, refer to clause 5.3.3 of 3GPP TS 38.331. Details are not described herein.

After the UE completes establishment of the RRC connection, the UE may carry a non-access stratum (non-access stratum, NAS) request in the RRC setup complete (RRC setup complete) message, to implement specific service processing.

In a possible implementation, the UE carries a UE registration NAS request in the RRC setup complete (RRC setup complete) message, and requests, in a UE registration process, a network to establish a PDU session (session) used by the UE for user equipment management.

For example, the NAS request carried by the UE in the RRC setup complete (RRC setup complete) message is UE registration with PDU session established. In other words, the UE initiates an attachment registration request, to request the network to perform authentication and location registration on the UE, and to request to establish a PDU session carrying a requested data network name (data network name, DNN) (requested DNN) identifier.

In another possible implementation, after the UE completes an attachment registration procedure, the UE initiates a separate PDU session establishment procedure, to trigger establishment of a PDU session for user equipment management data transmission.

User equipment management data includes operation instructions for parameter configuration, a factory reset, a restart, a software upgrade, and the like of the user equipment, a performance data file uploaded by the user equipment, and the like.

For example, after the UE completes the attachment registration procedure, the UE sends, to the control plane network element of the 5G core network, a UE requested PDU session establishment NAS request carrying a requested DNN (requested DNN) identifier, to trigger establishment of the PDU session for user equipment management data transmission.

The DNN identifier is an identifier of a UE requested service type. In this embodiment, a requested DNN (requested DNN) is an identifier of a UE requested user equipment management service. After a network side receives a request from the UE, the network side establishes the corresponding PDU session for the UE by using the requested DNN (requested DNN) identifier.

S204: The gNB sends a first request message to the control plane network element of the 5G core network.

After the gNB receives the NAS request from the UE, the gNB sends, to the control plane network element of the 5G core network, the NAS request from the UE through the first request message. The first request message includes a first identifier. The first identifier indicates the user equipment management service. The first request message is used to request to establish a PDU session for the user equipment management service.

In an example, after the gNB receives the NAS request from the UE, the gNB sends, to the control plane network element of the 5G core network, the NAS request from the UE through an uplink NAS transfer (Uplink NAS transfer) message. The uplink NAS transfer (Uplink NAS transfer) message carries the requested DNN (requested DNN) identifier. The control plane network element of the 5G core network includes an AMF, an SMF, and the like. After the AMF performs authentication and location registration on the UE, the AMF initiates the PDU session establishment procedure, and sends a PDU session establishment request to the SMF.

S205: The control plane network element of the 5G core network configures an IP address of the UE, a QoS flow identifier, and first indication information based on the first request message, where the first indication information indicates an access network device to establish a user equipment management channel.

In an example, the SMF receives the PDU session establishment request sent by the AMF. After the SMF identifies, based on the requested DNN (requested DNN) identifier sent by the UE, that the PDU session requested by the UE is used for transmission of user equipment management data of the UE, the SMF performs operations of assigning an internet protocol (internet protocol, IP) address (a UE IP) to the UE and configuring a QoS flow identifier (QoS flow ID, QFI), but does not establish an N4 interface session with a user plane function (user plane function, UPF) network element, that is, does not trigger the UPF to perform resource allocation and parameter configuration for the PDU session. In addition, the SMF generates the first indication information based on the first identifier (for example, the requested DNN identifier) in the first request message, where the first indication information indicates the access network device to establish the user equipment management channel. For example, the first indication information may be a QFI mapping to OM indication. The indication information indicates the gNB to perform the following operations: when establishing uplink and downlink routing tables for user equipment management data forwarding, establishing a correspondence between an operation and management (operation and management, OM) OM IP and the QFI, and establishing a correspondence between the UE IP and the QFI and a correspondence between the QFI and a data radio bearer (data radio bearer, DRB) ID.

During implementation of S205, a function processing logic of the SMF for the PDU session establishment request is changed. Only when the type of the service identified by the requested DNN (requested DNN) is the user equipment management service, the N4 session and an operation of UPF resource allocation are not performed. The N4 session and UPF resource allocation need to be performed for establishment of a PDU session for a service of another type.

S206: The control plane network element of the 5G core network sends a second request message to the gNB, where the second request message is used to request resource information for establishing the PDU session, and the second request message includes the IP address of the UE, the QoS flow identifier, and the first indication information.

In a possible implementation, after the SMF completes S205, the SMF replies to the AMF with a PDU session establishment response message, and sends, to the AMF, information such as the IP address assigned to the UE and the QFI. The AMF sends the second request message to the gNB through an interface between the AMF and the gNB.

For example, if the UE triggers, through the separate PDU session establishment procedure, establishment of the PDU session for user equipment management data transmission after the UE completes attachment registration, the second request message may be PDU session resource request (PDU session resource request) information, used to request the resource information for establishing the PDU session. The second request message carries the IP address (UE IP) assigned by the SMF to the UE, the QFI, and the first indication information.

S207: The gNB assigns the resource information of the PDU session based on the second request message.

In an example, the gNB assigns DRB identifier (DRB ID) information based on the second request message, and establishes the correspondence between the QFI and the DRB ID.

S208: The gNB constructs user equipment management channel information based on the first indication information.

In a possible implementation, the gNB establishes a user equipment management data forwarding route based on the first indication information, that is, establishes the correspondence between the OM IP and the QFI, and establishes the correspondence between the UE IP and the QFI and the correspondence between the QFI and the DRB ID. The OM IP identifies an IP address, namely, an EMS IP, of a radio network management system that manages a radio network element, namely, the gNB.

In a subsequent process of user equipment management data forwarding, for forwarding of an uplink management data packet (sent by the UE to the EMS), the gNB receives the uplink data packet sent by the UE, then parses a QFI in a packet header, determines, based on the foregoing established routing tables, that the data packet including the QFI needs to be forwarded to a receive end corresponding to an OM IP address, and directly forwards the data packet. For forwarding of a downlink management data packet (sent by the EMS to the UE), the gNB receives the downlink data packet from the EMS, parses a UE IP in a packet header, determines a corresponding QFI based on the foregoing established routing tables, further performs querying based on the QFI to determine a corresponding DRB ID, and forwards the downlink data packet by using a data radio bearer identified by the DRB ID.

S209: The gNB sends an RRC connection reconfiguration (RRC reconfiguration) message to the UE, where the RRC connection reconfiguration message includes the user equipment management channel information.

In a possible implementation, after the gNB completes resource allocation and parameter configuration of the radio network element, the gNB sends the RRC connection reconfiguration (RRC reconfiguration) message to the UE, and forwards a processing result that is of a UE request (the NAS in S203) and that is sent by the AMF, that is, a NAS accept (accept) message. The NAS accept (accept) message carries related configurations, such as the UE IP and the QFI, provided by the control plane network element of the 5G core network to the UE.

In an example, if the UE carries the UE registration NAS request in the RRC setup complete (RRC setup complete) message in step S203, the NAS accept (accept) message in this step is a registration accept NAS (registration accept NAS) message.

In another example, if in step S203, after the UE completes the attachment registration procedure, the UE sends, to the control plane network element of the 5G core network, the UE requested PDU session establishment NAS request carrying the requested DNN (requested DNN) identifier, to trigger establishment of the PDU session for user equipment management data transmission, the NAS accept (accept) message in this step is a PDU session establishment accept NAS (PDU session establishment accept NAS).

S210: The UE performs configuration based on the RRC connection reconfiguration (RRC reconfiguration) message.

S211: The UE sends an RRC connection reconfiguration complete (RRC reconfiguration complete) message to the gNB.

So far, establishment of the channel for transmission of the user equipment management data of the UE is completed.

For uplink user equipment management data, the UE performs modeling and encapsulation on the data (which is encapsulated into a TR-069 packet) according to the TR-069 protocol, further performs protocol processing based on a data plane protocol stack of a radio air interface (a format of a processed uplink user equipment management data packet includes a QFI, a UE IP, and a payload (Payload)), and sends the user equipment management data to the gNB by using a DRB between the UE and the gNB. After the gNB receives the data packet, the gNB queries a local routing table (the routing table established in step S208) based on a QFI in a packet header, to determine a destination IP (namely, an EMS IP) for forwarding. After the EMS receives a user equipment management data packet sent by the gNB through a radio network element management channel, the EMS records a correspondence between the UE IP and a gNB IP (or a gNB ID). The correspondence is used for routing of downlink user equipment management data, that is, used to inform the EMS of a specific radio network element management channel through which the UE corresponding to the UE IP performs sending. The EMS parses, according to the TR-069 protocol, the user equipment management data sent by the UE, and performs corresponding service processing.

For downlink user equipment management data, the EMS performs modeling and encapsulation on the data (which is encapsulated into a TR-069 packet) according to the TR-069 protocol, and sends a downlink user equipment management data packet to a corresponding gNB through a radio network element management channel for a gNB IP (or a gNB ID) corresponding to a UE IP. The gNB queries a local routing table (the routing table established in step S208) based on the UE IP in a packet header to determine a corresponding QFI, further performs querying based on the QFI to determine a corresponding DRB ID, and sends the downlink user equipment management data to the UE by using a DRB identified by the DRB ID. The UE parses the received downlink user equipment management data according to the TR-069 protocol, and performs corresponding service processing.

According to the technical solutions provided in this application, a radio network element management channel is reused to implement user equipment management data transmission. This avoids allocating resources on a UPF for user equipment management data processing, and reduces consumption of core network resources. In addition, a radio network element management channel needs to be established provided that a network element is deployed. Therefore, this part of resources is reused to implement management of user equipment without causing additional consumption of resources.

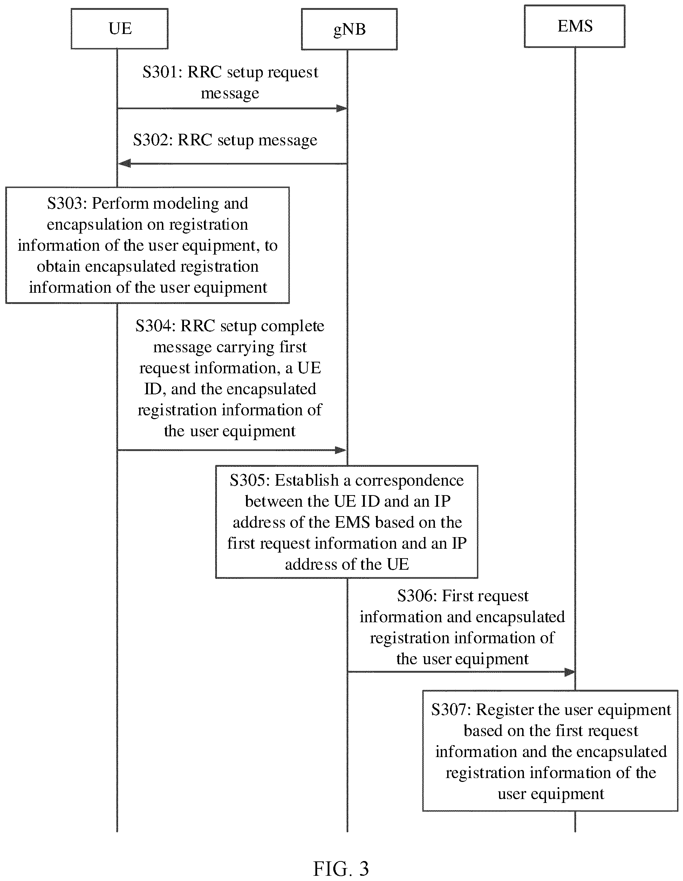

FIG. 3 is a schematic flowchart of another communication method according to an embodiment of this application. As shown in FIG. 3, the method includes at least S301 to S307.

S301: UE sends an RRC setup request (RRC setup request) message to a gNB.

S302: The gNB sends an RRC setup (RRC setup) message to the UE.

For the RRC setup request and RRC setup in an RRC connection establishment procedure and detailed descriptions of the procedure, refer to clause 5.3.3 of 3GPP TS 38.331. Details are not described in the present invention.

S303: The UE performs modeling and encapsulation on registration information of the user equipment, to obtain encapsulated registration information of the user equipment.

After the UE completes RRC connection configuration, the UE initiates a plug and play (plug and play, PnP) device registration procedure, and performs modeling and encapsulation on the registration information of the UE according to the TR-069 protocol. Table 1 shows the registration information of the user equipment UE. The registration information of the UE includes but is not limited to parameter information shown in Table 1.

**Table 1 Registration information of user equipment UE**

| Field | Description |
|---|---|
| Device ID | Device identifier of the UE |
| Software version | Current software version of the UE |
| Capacity | Specification capacity of the UE, which may be specifically a maximum quantity of common terminals that can be connected, a maximum (uplink or downlink) rate supported, or the like |
| Manufacturer identifier | |
| Product similar identifier | Product type identifier used for a serial number. In other words, for a specified manufacturer, this parameter identifies a product or a product type, and this parameter is unique for the type |
| Serial number | For a specified product type and manufacturer, this identifier may uniquely determine the equipment |
| Supported event feature | "0 BOOTSTRAP", "1 BOOT", "2 PERIODIC", "4 VALUE CHANGE ", "6 CONNECTION REQUEST", "7 TRANSFER COMPLETE", "8 DIAGNOSTICS COMPLETE", "M Reboot", "M Download", "M Reboot", and "M Upload" |

S304: The UE sends an RRC setup complete (RRC setup complete) message to the gNB, where the RRC setup complete message includes first request information, a UE ID, and the encapsulated registration information of the user equipment. The first request information is used to request a registration procedure of the user equipment.

For example, the first request information may be PnP requested (PnP requested) registration indication information.

S305: The gNB establishes a correspondence between the UE ID and an IP address of an EMS based on the first request information and an IP address of the UE.

In a possible implementation, the gNB determines, based on the PnP requested registration indication information, that the UE requests to perform user equipment registration. In this case, the gNB is triggered to complete, for the UE, routing configuration of a user equipment management channel to OM, that is, establish a correspondence between the UE ID and an OM channel (for example, a channel identified by an OM IP), and sends device registration information of the UE to a radio network element management system. The UE ID is a user equipment identifier for initiating user equipment registration, and is used for routing of a subsequent signaling message. A value of the UE ID may be a service set identifier (service set identifier, SSID) or the like. The encapsulated registration information of the user equipment is a parameter set obtained by performing modeling and encapsulation according to the TR-069 protocol, and the gNB cannot parse or perceive specific content of the information.

S306: The gNB sends the encapsulated registration information of the user equipment to the EMS based on the first request information.

The gNB sends the encapsulated registration information of the user equipment through a management channel (for example, through an OM notification (OM notification) message) between the gNB and the radio network element management system. This step may be implemented based on a private solution of a gNB device vendor, or may be implemented with reference to a VES-based (VES-based) solution, an operation administration and maintenance (operation administration and maintenance, OAM) notification (notification) method, or a data stream reporting (stream data report) method in 3GPP standard protocols. The private solution of the gNB device vendor is a private solution designed by each gNB vendor, and is not disclosed externally. This is not discussed in this application. The following describes in detail a VES-based solution, an OAM notification solution, or a stream data report solution designed, with reference to the 3GPP standard protocols, to implement this step.

### (1) VES-based solution

A VES event (event) is a common means for the gNB to report information to the EMS. The VES event includes two parts: a common event header (Common event header) and a technology domain (Technology domain).

In a possible implementation, to implement transmission of the registration information of the user equipment based on the VES event (event), the VES event (event) needs to be enhanced. To be specific, the common event header (Common event header) is extended to carry a gNB IP, and the technology domain (Technology domain) of the VES event (event) is extended to add a UE PnP fields domain datatype (UE PnP fields domain datatype). Table 2 shows a list of UE PnP fields domain datatype parameters, and Table 3 shows a list of UE PnP information parameters.

**Table 2 List of UE PnP fields domain datatype parameters**

| Field | Description |
|---|---|
| UE ID | Identifier of user equipment |
| UE PnP information table | Registration information of the UE obtained by performing modeling and encapsulation according to TR069 |

**Table 3 List of UE PnP information parameters**

| Field | Description |
|---|---|
| Device ID | Device identifier of UE |
| "oamV4Ip Address" | Maintenance IPv4 address of the UE |
| "oamV6Ip Address" | Maintenance IPv6 address of the UE |
| Software version | Current software version of the UE |
| Capacity | Specification capacity of the UE, which may be specifically a maximum quantity of common terminal UEs that can be connected, a maximum (uplink or downlink) rate supported, or the like |
| Manufacturer identifier | |
| Product similar identifier | Product type identifier used for a serial number. In other words, for a specified manufacturer, this parameter identifies a product or a product type, and this parameter is unique for the type. |
| Serial number | For a specified product type and a manufacturer, this identifier may uniquely identify the equipment. |
| Supported event feature | "0 BOOTSTRAP" |
| | "1 BOOT" |
| | "2 PERIODIC" |
| | "4 VALUE CHANGE" |
| | "6 CONNECTION REQUEST" |
| | "7 TRANSFER COMPLETE" |
| | "8 DIAGNOSTICS COMPLETE" |
| | "M Reboot" |
| | "M Download" |
| | "M Reboot" |
| | "M Upload" |

In another possible implementation, a UE PnP fields domain datatype (UE PnP fields domain datatype) is not added to the technology domain (Technology domain) of the VES event, but an existing physical network element function (physical network function, PNF) registration fields domain datatype (PNF registration fields domain datatype) in the VES event is reused. A parameter attribute included in the PNF registration fields domain datatype (PNF registration fields domain datatype) is extended to include the registration information of the user equipment. An attribute addition field (additional field) of a PNF registration field (PNF registration field) attribute may be extended to include parameter information shown in Table 3.

### (2) OAM notification

A type of UE management (management) (or UE PnP) notification message needs to be defined, so that the gNB can perform reporting based on a conventional OAM management notification (notification) mechanism (refer to 3GPP TS 28.532) after receiving device information of the user equipment. Table 4 shows information included in the UE management notification (UE management notification) message.

**Table 4 List of UE management notification parameters**

| Parameter name | Description |
|---|---|
| Object class | UE managed object |
| Object instance | Object instance identifier |
| Notification identifier | Identifier that identifies this notification |
| Notification type | "UE management" |
| Event time | Time at which the notification is sent |
| System distinguished name | System object instance identifier |
| Correlated notification | Identifier of a correlated notification |
| Attribute list | UE attribute information |

In an example, in Table 4, a value of the object class (object class) is a UE managed object (managed object, MO), a value of the object instance (object instance) is a distinguished name (distinguished name, DN) of the UE MO, and a value of the notification type (notification type) is "UE management". Therefore, the UE MO and an attribute of the UE MO need to be defined. Table 5 shows attributes and parameters of the MO of the UE.

**Table 5 Attributes and parameters of a UE MO**

| Attribute name | Parameter list |
|---|---|
| Device ID | Device identifier |
| UE attribute list | "DL BandWidth" |
| | "UL BandWidth" |
| | "UplinkMaxThrp" |
| | "DownlinkMaxThrp" |
| | "Maximum number of UE" |
| | "Historical data storage duration" |
| | "oamV4IpAddress" |
| | "oamV6IpAddress" |
| | Software version |
| | Manufacturer identifier |
| | Product type identifier |
| | Serial number |
| | Supported event feature |
| | Parameter list |
| | Parameter key |

### (3) Data stream reporting

According to a 3GPP standard protocol, the gNB may report information to the EMS through streaming (streaming) between the gNB and the EMS. A stream (streaming) dedicated to UE management data information reporting needs to be added to a streaming connection (streaming connection) between the gNB and the EMS, so that the gNB can report the registration information of the user equipment to the EMS.

After the UE completes attachment registration with a 5G network, the gNB initiates a UE management data information reporting procedure. To be specific, a new stream (streaming) is created in the streaming connection (streaming connection) between the gNB and the EMS through an add stream operation (add stream operation) of a streaming data reporting service (streaming data report service). Table 6 shows input parameters of an add stream operation (add stream operation) creation request.

**Table 6 Parameters of an add stream operation**

| Parameter name | Description |
|---|---|
| Connection identifier | The connection identifier identifies a streaming connection between the gNB and a management plane |
| Stream information list | For dedicated data stream reporting, each piece of stream information includes: |
| | - a stream type carrying a value "UE management"; |
| | - a stream identifier; and |
| | - a UE data container (refer to the list of UE PnP information parameter in Table 3) |

Based on the foregoing step, after creation of the stream (stream) for user equipment management data reporting is completed, the gNB can complete reporting of the registration information of the user equipment through a report data stream operation (report stream data operation). Table 7 shows parameters included in the report data stream operation (report streamdate operation).

**Table 7 List of parameters in a report data stream operation**

| Parameter name | Description |
|---|---|
| Connection identifier | The connection identifier identifies a streaming connection on which reported data is sent, and its format depends on a solution set. |
| Data stream data | Refer to the list of UE PnP information parameters in Table 3. |

S307: The EMS registers the user equipment based on the received first request information.

The EMS determines, based on a PnP requested registration indication in the first request information, that the reported information is a PnP registration request sent by the UE. In this case, UE mgt performs device registration management of the user equipment, and maintains a correspondence between the UE ID and the gNB IP. The correspondence is used for routing of downlink user equipment management data, that is, used to inform the EMS of a specific radio network element management channel through which the UE corresponding to the UE ID performs sending.

The EMS (UE mgt) parses, according to the TR-069 protocol, PnP device registration information sent by the UE, and registers terminal device information of the UE.

So far, establishment of a channel for forwarding of terminal management data of the UE is completed.

For uplink user equipment management data, the UE performs modeling and encapsulation on the data (which is encapsulated into a TR-069 packet) according to the TR-069 protocol, further performs protocol processing based on a control plane protocol stack of a radio air interface, and sends the user equipment management data to the gNB by using a signaling radio bearer (signaling radio bearer, SRB) of a radio air interface between the UE and the gNB. After the gNB receives the management data, the gNB queries a local routing table (the routing table established in step S205) based on a UE ID in an SRB signaling message, to determine a destination IP (namely, an EMS IP) for forwarding. After the EMS receives a user equipment management data packet sent by the gNB through a radio network element management channel, the EMS records a correspondence between the UE ID and a gNB ID. The EMS parses, according to the TR-069 protocol, the management data sent by the UE, and performs corresponding service processing.

For downlink user equipment management data, the EMS performs modeling and encapsulation on the data (which is encapsulated into a TR-069 packet) according to the TR-069 protocol, and sends a downlink user equipment management data packet to a corresponding gNB through a radio network element management channel for a gNB ID corresponding to a UE ID. The gNB queries a local routing table (the routing table established in step S205) based on the UE ID to determine a corresponding SRB, and sends the downlink user equipment management data to the UE by using the SRB. The UE parses the received downlink user equipment management data according to the TR-069 protocol, and performs corresponding service processing.

According to the technical solutions provided in this application, a radio network element management channel is reused to implement user equipment management data transmission. This avoids allocating resources on a UPF for user equipment management data processing, and reduces consumption of core network resources. In addition, radio signaling bearer resources of the UE are reused to transmit terminal device management data. Therefore, there is no need to establish and allocate a radio resource for the UE to establish a data radio bearer used to transmit the terminal device management data. This further saves radio air interface resources.

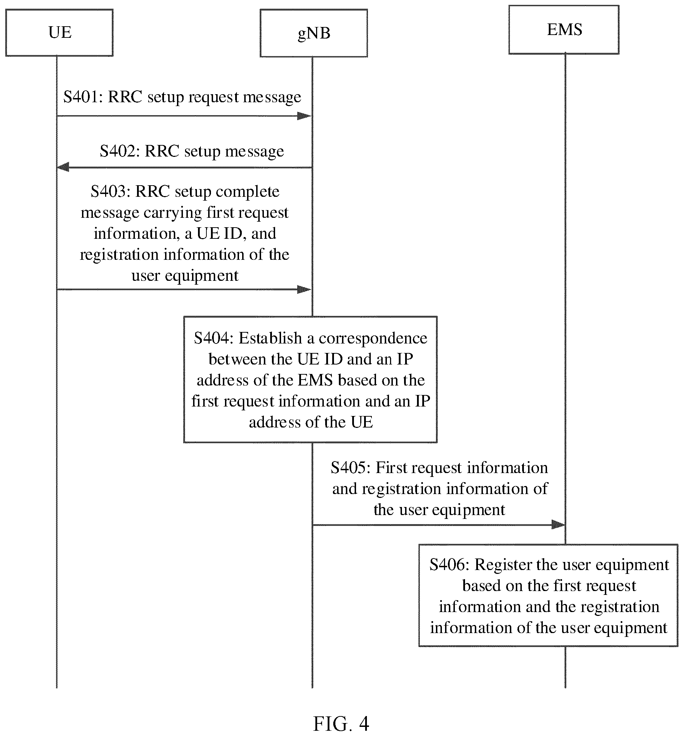

FIG. 4 is a schematic flowchart of still another communication method according to an embodiment of this application. As shown in FIG. 4, the method includes at least S401 to S406.

S401: UE sends an RRC setup request (RRC setup request) message to a gNB.

S402: The gNB sends an RRC setup (RRC setup) message to the UE.

For a detailed procedure of S401 and S402, refer to clause 5.3.3 of 3GPP TS 38.331. Details are not described herein.

S403: The UE sends an RRC setup complete (RRC setup complete) message to the gNB, where the RRC setup complete message includes first request information (PnP requested registration indication information), a UE ID, and device registration information of the UE. The first request information is used to request a registration procedure of the user equipment.

In a possible implementation, the first request information is PnP requested (PnP requested) registration indication information. After the UE completes RRC connection configuration, the UE initiates a PnP device registration procedure based on the PnP requested (PnP requested) registration indication information, and replies to the gNB with the RRC setup complete (RRC setup complete) message. Each attribute parameter of the device registration information of the UE (refer to Table 1) is directly transmitted to the gNB as each independent information element parameter of the RRC setup complete (RRC setup complete) message. Alternatively, the device registration information of the UE may be transmitted to the gNB as a whole in a form of an RRC message container (container). In other words, all attribute parameters in Table 1 are used as a cell container (container).

S404: The gNB establishes a correspondence between the UE ID and an IP address of an EMS based on the first request information and an IP address of the UE.

S405: The gNB sends the registration information of the user equipment to the EMS based on the first request information.

S406: The EMS registers the user equipment based on the received first request information, the received registration information of the user equipment, and an IP address of the gNB.

So far, establishment of a channel for forwarding of user equipment management data of the UE is completed.

For uplink user equipment management data, the user equipment UE performs protocol processing based on a control plane protocol stack of a radio air interface, and sends the user equipment management data to the gNB by using an SRB between the UE and the gNB. After the gNB receives the management data, the gNB queries a local routing table based on a UE ID in an SRB signaling message, to determine a destination IP (namely, an EMS IP) for forwarding. After the EMS receives a user equipment management data packet sent by the gNB through a radio network element management channel, the EMS records a correspondence between the UE ID and a gNB ID. The EMS receives the management data sent by the UE, and performs corresponding service processing.

For downlink user equipment management data, the EMS sends a downlink user equipment management data packet to a corresponding gNB through a radio network element management channel for a gNB ID corresponding to a UE ID. The gNB queries a local routing table based on the UE ID to determine a corresponding SRB, and sends the downlink user equipment management data to the UE by using the SRB. The UE receives the downlink user equipment management data, and performs corresponding service processing.

According to the technical solutions provided in this application, a radio network element management channel and radio signaling bearer resources are reused to implement user equipment management data transmission. This avoids allocating resources on a UPF for terminal management data processing, and reduces consumption of network resources. In addition, a processing function in the TR-069 protocol is removed. This can reduce complexity of the user equipment and the EMS management system.

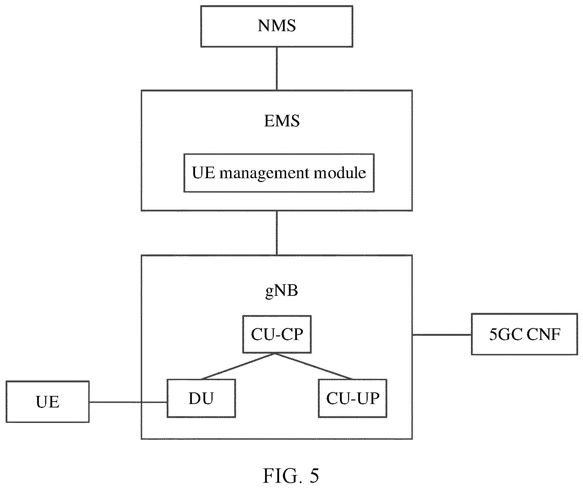

FIG. 5 is a schematic diagram of another system architecture according to an embodiment of this application. As shown in FIG. 5, the system architecture in this embodiment of this application includes an NMS, an EMS, UE, a gNB, and a control plane network element of a 5G core network. The gNB includes a central unit-control plane (central unit-control plane, CU-CP), a central unit-user plane (central unit-user plane, CU-UP), and a distribution unit (distribution unit, DU).

The CU-CP mainly provides functions such as radio connection management (namely, RRC connection management) and security management.

The CU-UP mainly provides functions such as user data packet encryption/decryption and integrity protection.

The DU mainly provides functions such as data packet reassembly/fragmentation, retransmission, and channel management.

The EMS is connected to and exchanges information with each of the CU-CP, the CU-UP, and the DU through an independent interface.

It should be noted that, for the NMS, the EMS, the UE, and the control plane network element of the 5G core network, refer to the system architecture shown in FIG. 1. Details are not described herein again.

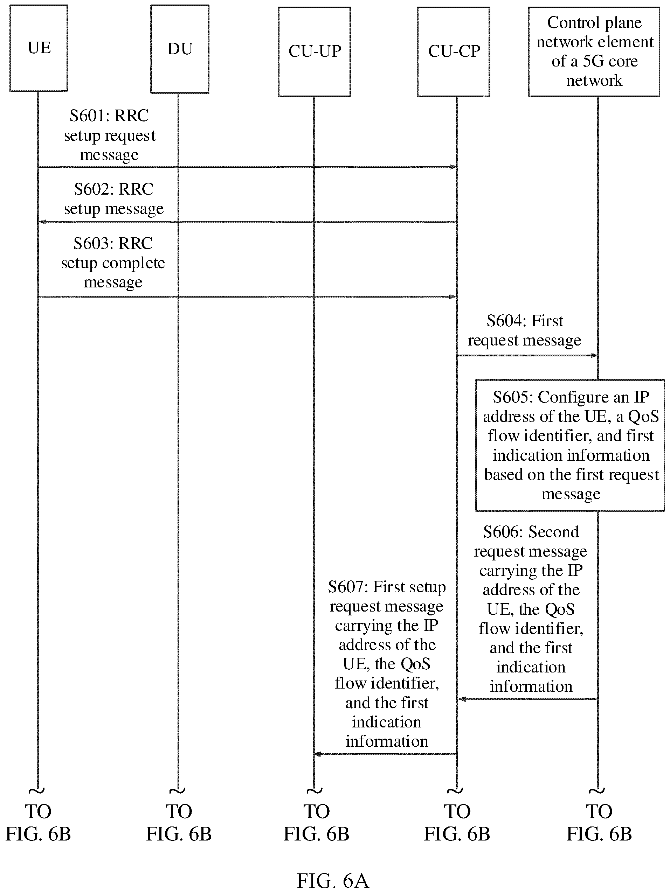

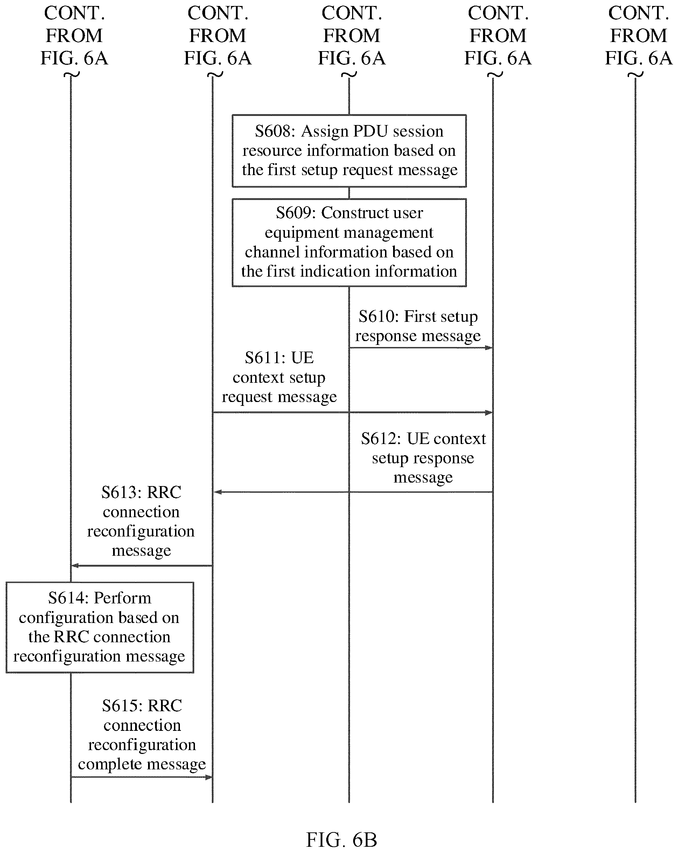

FIG. 6A and FIG. 6B are a schematic flowchart of yet another communication method according to an embodiment of this application. As shown in FIG. 6A and FIG. 6B, the method includes at least S601 to S615.

S601: UE sends an RRC setup request (RRC setup request) message to a CU-CP.

S602: The CU-CP sends an RRC setup (RRC setup) message to the UE.

S603: The UE sends an RRC setup complete (RRC setup complete) message to the CU-CP.

S604: The CU-CP sends a first request message to a control plane network element of a 5G core network.

S605: The control plane network element of the 5G core network configures an IP address of the UE, a QoS flow identifier, and first indication information based on the first request message, where the first indication information indicates an access network device to establish a user equipment management channel.

S606: The control plane network element of the 5G core network sends a second request message to the CU-CP, where the second request message is used to request resource information for establishing a PDU session, and the second request message includes the IP address of the UE, the QoS flow identifier, and the first indication information.

It should be noted that, for S601 to S606, refer to S201 to S206. Details are not described herein again.

S607: The CU-CP sends a first setup request message to a CU-UP, where the first setup request message includes the IP address of the UE, the QoS flow identifier, and the first indication information.

In a possible implementation, the first setup request message is a bearer context setup request (bearer context setup request) message, and the bearer context setup request (bearer context setup request) message carries the IP address of the UE, the QoS flow identifier, and the first indication information.

S608: The CU-UP assigns PDU session resource information based on the first setup request message.

S609: The CU-UP constructs user equipment management channel information based on the first indication information.

It should be noted that, for S608 and S609, refer to S207 and S208. Details are not described herein again.

S610: The CU-UP sends a first setup response message to the CU-CP.

In a possible implementation, the first setup response message is a bearer context setup response (bearer context setup response) message.

S611: A DU sends a UE context setup request message to the CU-CP.

S612: The CU-CP sends a UE context setup response message to the DU.

S613: The DU sends an RRC connection reconfiguration (RRC reconfiguration) message to the UE, where the RRC connection reconfiguration message includes the user equipment management channel information.

S614: The UE performs configuration based on the RRC connection reconfiguration (RRC reconfiguration) message.

S615: The UE sends an RRC connection reconfiguration complete (RRC reconfiguration complete) message to the DU.

It should be noted that, for S611 to S615, refer to clause 8.9 in the 3GPP TS 38.401. Details are not described herein.

According to the technical solutions provided in this application, a radio network element management channel is reused to implement user equipment management data transmission. This avoids allocating resources on a UPF for user equipment management data processing, and reduces consumption of core network resources. In addition, a radio network element management channel needs to be established provided that a network element is deployed. Therefore, this part of resources is reused to implement management of user equipment without causing additional consumption of resources.

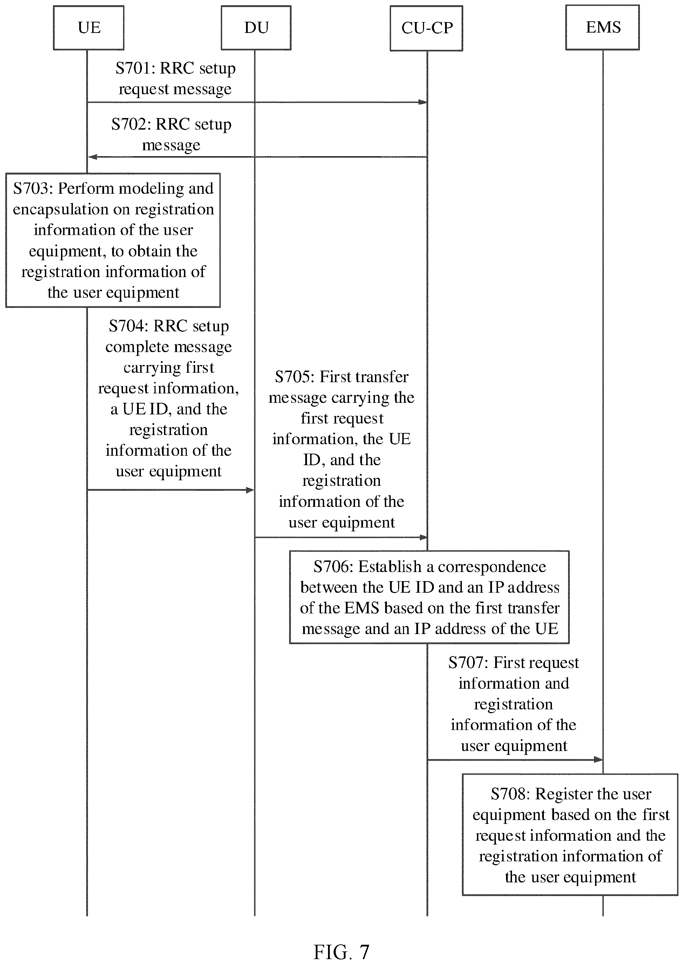

FIG. 7 is a schematic flowchart of still yet another communication method according to an embodiment of this application. As shown in FIG. 7, the method includes at least S701 to S708.

S701: UE sends an RRC setup request (RRC setup request) message to a CU-CP.

S702: The CU-CP sends an RRC setup (RRC setup) message to the UE.

S703: The UE performs modeling and encapsulation on registration information of the user equipment, to obtain encapsulated registration information of the user equipment.

S704: The UE sends an RRC setup complete (RRC setup complete) message to a DU, where the RRC setup complete message includes first request information, a UE ID, and the encapsulated registration information of the user equipment. The first request message is used to request a registration procedure of the user equipment.

It should be noted that, for S701 to S704, refer to S301 to S304. Details are not described herein again.

S705: The DU sends a first transfer message to the CU-CP, where the first transfer message includes the first request information, the UE ID, and the encapsulated registration information of the user equipment.

In a possible implementation, the first transfer message is an uplink RRC message transfer (UL RRC message transfer) message. The uplink RRC message transfer (UL RRC message transfer) message includes the first request information, the UE ID, and the encapsulated registration information of the user equipment. The first request information may be PnP requested (PnP requested) registration indication information. The DU sends the uplink RRC message transfer (UL RRC message transfer) message to the CU-CP through an F1-C interface.

S706: The CU-CP establishes a correspondence between the UE ID and an IP address of an EMS based on the first transfer message and an IP address of the UE.

S707: The CU-CP sends the registration information of the user equipment to the EMS based on the first request information.

S708: The EMS registers the user equipment based on the first request message.

It should be noted that, for S706 to S708, refer to S305 to S307. Details are not described herein again.

According to the technical solutions provided in this application, a radio network element management channel is reused to implement user equipment management data transmission. This avoids allocating resources on a UPF for user equipment management data processing, and reduces consumption of core network resources. In addition, radio signaling bearer resources of the UE are reused to transmit user equipment management data. Therefore, there is no need to establish and allocate a radio resource for the UE to establish a data radio bearer used to transmit the user equipment management data. This further saves radio air interface resources.

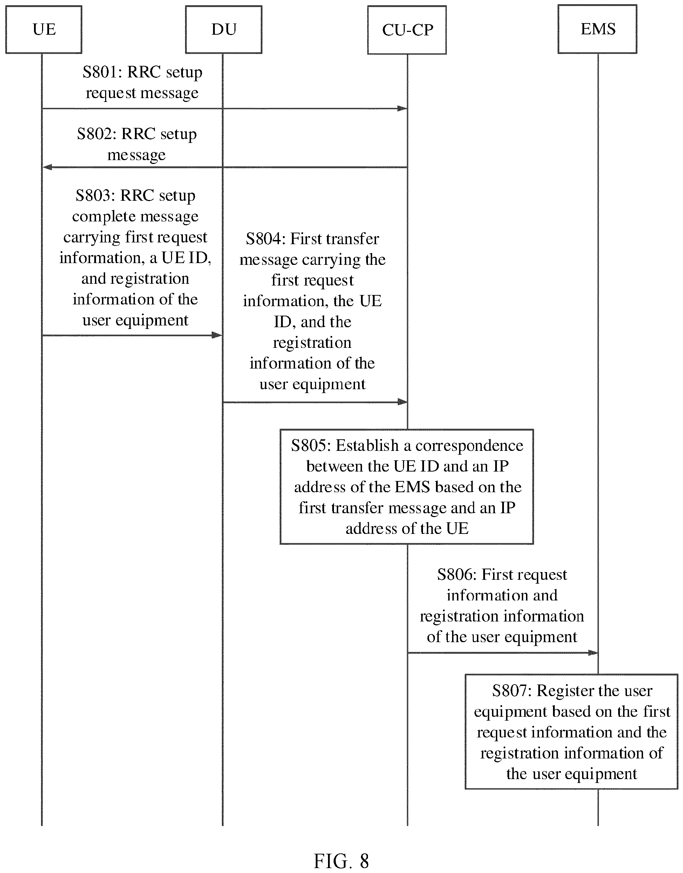

FIG. 8 is a schematic flowchart of a further communication method according to an embodiment of this application. As shown in FIG. 8, the method includes at least S801 to S807.

S801: UE sends an RRC setup request (RRC setup request) message to a CU-CP.

S802: The CU-CP sends an RRC setup (RRC setup) message to the UE.

S803: The UE sends an RRC setup complete (RRC setup complete) message to a DU, where the RRC setup complete message includes first request information, a UE ID, and registration information of the user equipment. The first request information is used to request a registration procedure of the user equipment.

It should be noted that, for S801 to S806, refer to S401 to S403. Details are not described herein again.

S804: The DU sends a first transfer message to the CU-CP, where the first transfer message includes the first request information, the UE ID, and the registration information of the user equipment.

In a possible implementation, the first transfer message is an uplink RRC message transfer (UL RRC message transfer) message. The uplink RRC message transfer (UL RRC message transfer) message includes the first request information (PnP requested registration indication information), the UE ID, and the registration information of the user equipment. The first request information may be the PnP requested (PnP requested) registration indication information. The DU sends the uplink RRC message transfer (ULRRC message transfer) message to the CU-CP through an F1-C interface.

S805: The CU-CP establishes a correspondence between the UE ID and an IP address of an EMS based on the first transfer message and an IP address of the UE.

S806: The CU-CP sends the registration information of the user equipment to the EMS based on the first request information.

S807: The EMS registers the user equipment based on the first request information.

It should be noted that, for S805 to S807, refer to S404 to S406. Details are not described herein again.

According to the technical solutions provided in this application, a radio network element management channel and radio signaling bearer resources are reused to implement terminal device management data transmission. This avoids allocating resources on a UPF for terminal management data processing, and reduces consumption of network resources. In addition, a processing function in the TR-069 protocol is removed. This can reduce complexity of a terminal device and the EMS management system.

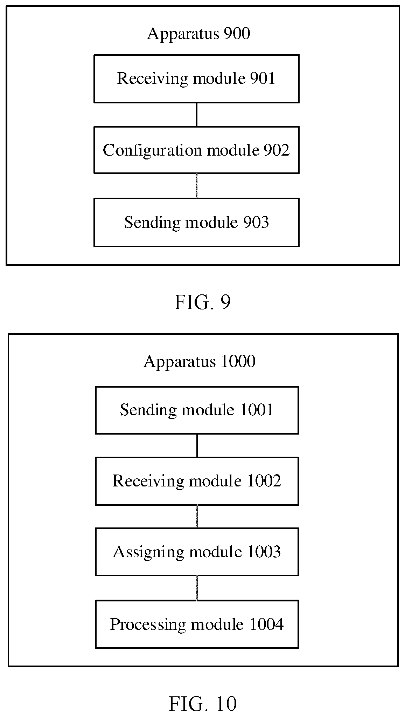

FIG. 9 is a schematic diagram of a structure of a communication apparatus according to an embodiment of this application. As shown in FIG. 9, an apparatus 900 may include a receiving module 901, a configuration module 902, and a sending module 903. The apparatus 900 may be configured to implement an operation implemented by the control plane network element of the 5G core network in the embodiment shown in FIG. 2 or FIG. 6A and FIG. 6B.

In a possible implementation, the apparatus 900 may be configured to implement the method shown in FIG. 2. For example, the receiving module 901 is configured to implement S204, the configuration module 902 is configured to implement S205, and the sending module 903 is configured to implement S206.

In another possible implementation, the apparatus 900 may be configured to implement the method shown in FIG. 6A and FIG. 6B. For example, the receiving module 901 is configured to implement S604, the configuration module 902 is configured to implement S605, and the sending module 903 is configured to implement S606.

FIG. 10 is a schematic diagram of a structure of a communication apparatus according to another embodiment of this application. As shown in FIG. 10, an apparatus 1000 may include a sending module 1001, a receiving module 1002, an assigning module 1003, and a processing module 1004. The apparatus 1000 may be configured to implement an operation implemented by the gNB (including the DU, the CU-UP, and the CU-CP) in the embodiment shown in FIG. 2 or FIG. 6A and FIG. 6B.

In a possible implementation, the apparatus 1000 may be configured to implement the method shown in FIG. 2. For example, the sending module 1001 is configured to implement S202, S204, and S209, the receiving module 1002 is configured to implement S201, S203, S206, and S211, the assigning module 1003 is configured to implement S207, and the processing module is configured to implement S208.

In another possible implementation, the apparatus 1000 may be configured to implement the method shown in FIG. 6A and FIG. 6B. For example, the sending module 1001 is configured to implement S602, S604, and S613, the receiving module 1002 is configured to implement S601, S603, S606, and S615, the assigning module 1003 is configured to implement S608, and the processing module is configured to implement S609.

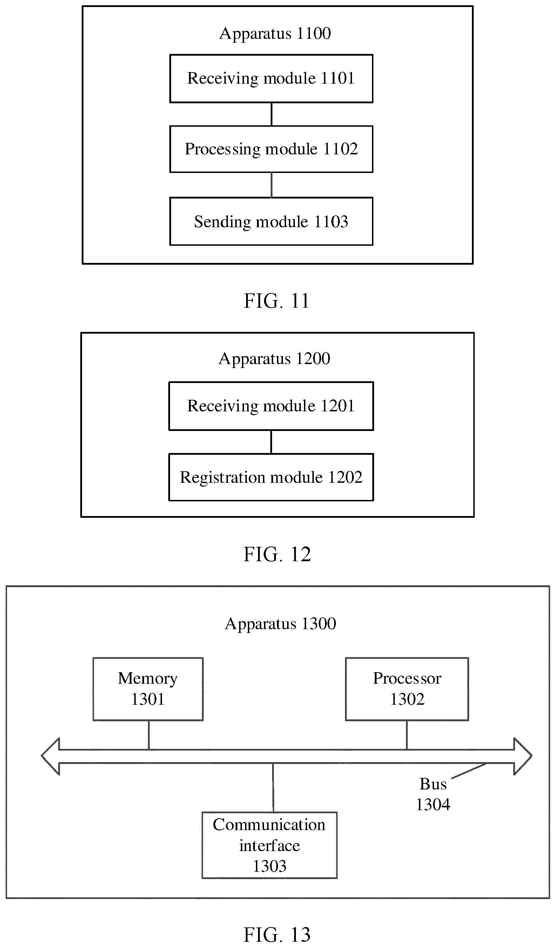

FIG. 11 is a schematic diagram of a structure of a communication apparatus according to still another embodiment of this application. As shown in FIG. 11, an apparatus 1100 may include a receiving module 1101, a processing module 1102, and a sending module 1103. The apparatus 1100 may be configured to implement an operation implemented by the gNB (including the DU, the CU-UP, and the CU-CP) in the embodiment shown in FIG. 3, FIG. 4, FIG. 7, or FIG. 8.

In a possible implementation, the apparatus 1100 may be configured to implement the method shown in FIG. 3. For example, the receiving module 1101 is configured to implement S301 and S304, the processing module 1102 is configured to implement S305, and the sending module 1103 is configured to implement S302 and S306.

In another possible implementation, the apparatus 1100 may be configured to implement the method shown in FIG. 4. For example, the receiving module 1101 is configured to implement S401 and S403, the processing module 1102 is configured to implement S404, and the sending module 1103 is configured to implement S402 and S405.

In still another possible implementation, the apparatus 1100 may be configured to implement the method shown in FIG. 7. For example, the receiving module 1101 is configured to implement S701 and S704, the processing module 1102 is configured to implement S706, and the sending module 1103 is configured to implement S702 and S707.

In yet another possible implementation, the apparatus 1100 may be configured to implement the method shown in FIG. 8. For example, the receiving module 1101 is configured to implement S801 and S804, the processing module 1102 is configured to implement S805, and the sending module 1103 is configured to implement S802 and S806.

FIG. 12 is a schematic diagram of a structure of a communication apparatus according to yet another embodiment of this application. As shown in FIG. 12, an apparatus 1200 may include a receiving module 1201 and a registration module 1202. The apparatus 1200 may be configured to implement an operation implemented by the EMS in the embodiment shown in FIG. 3, FIG. 4, FIG. 7, or FIG. 8.

In a possible implementation, the apparatus 1200 may be configured to implement the method shown in FIG. 3. For example, the receiving module 1201 is configured to implement S306, and the registration module 1202 is configured to implement S307.

In another possible implementation, the apparatus 1200 may be configured to implement the method shown in FIG. 4. For example, the receiving module 1201 is configured to implement S405, and the registration module 1202 is configured to implement S406.

In still another possible implementation, the apparatus 1200 may be configured to implement the method shown in FIG. 7. For example, the receiving module 1201 is configured to implement S707, and the registration module 1202 is configured to implement S708.

In yet another possible implementation, the apparatus 1200 may be configured to implement the method shown in FIG. 8. For example, the receiving module 1201 is configured to implement S806, and the registration module 1202 is configured to implement S807.

FIG. 13 is a schematic diagram of a structure of a communication apparatus according to still yet another embodiment of this application. An apparatus 1300 shown in FIG. 13 may be configured to: perform the method implemented by the control plane network element of the 5G core network in the embodiment shown in FIG. 2 or FIG. 6A and FIG. 6B, perform the method implemented by the gNB (including the DU, the CU-UP, and the CU-CP) in the embodiment shown in FIG. 2 or FIG. 6A and FIG. 6B, perform the method implemented by the gNB (including the DU, the CU-UP, and the CU-CP) in the embodiment shown in FIG. 3, FIG. 4, FIG. 7, or FIG. 8, or perform the method implemented by the EMS in the embodiment shown in FIG. 3, FIG. 4, FIG. 7, or FIG. 8.

As shown in FIG. 13, the apparatus 1300 in this embodiment includes a memory 1301, a processor 1302, a communication interface 1303, and a bus 1304. The memory 1301, the processor 1302, and the communication interface 1303 are communicatively connected to each other through the bus 1304.

The memory 1301 may be a read-only memory (read only memory, ROM), a static storage device, a dynamic storage device, or a random access memory (random access memory, RAM). The memory 1301 may store a program. The processor 1302 may be configured to: when the program stored in the memory 1301 is executed by the processor 1302, perform steps of the methods shown in FIG. 2 to FIG. 4 and FIG. 6A and FIG. 6B to FIG. 8.

The processor 1302 may use a general-purpose central processing unit (central processing unit, CPU), a microprocessor, an application-specific integrated circuit (application specific integrated circuit, ASIC), or one or more integrated circuits. The processor 1302 is configured to execute a related program, to implement the communication methods in the method embodiments of this application.

The processor 1302 may alternatively be an integrated circuit chip and has a signal processing capability. During implementation, steps of the methods in embodiments of this application may be completed by using an integrated logic circuit of hardware or an instruction in a form of software in the processor 1302.

The processor 1302 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor 1302 may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1301. The processor 1302 reads information in the memory 1301, and completes, in combination with hardware of the processor 1302, functions that need to be performed in the methods in embodiments of this application, for example, may perform the steps/functions in the embodiments shown in FIG. 2 to FIG. 4 and FIG. 6A and FIG. 6B to FIG. 8.

The communication interface 1303 may use, but is not limited to, a transceiver apparatus such as a transceiver, to implement communication between the apparatus 1300 and another device or a communication network.

The bus 1304 may include a path for transmitting information between components (for example, the memory 1301, the processor 1302, and the communication interface 1303) of the apparatus 1300.

It should be understood that the apparatus 1100 shown in this embodiment of this application may be an electronic device, or may be a chip configured in the electronic device.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement the embodiments, all or some of the foregoing embodiments may be implemented in a form of a computer program product. The computer program product includes one or more computer instructions or computer programs. When the program instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B each may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular or plural items (pieces). For example, at least one of a, b, or c may indicate: a, b, c, a-b, a-c, b-c, or a-b-c, where a, b, and c each may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as a separate product, the functions may be stored in a computer-readable storage medium. Based on such an understanding, the technical solutions of this application essentially or parts contributing to the current technology or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is performed by a control plane network element of a core network, and the method comprises:
receiving a first request message, wherein the first request message comprises a first identifier, the first identifier indicates a user equipment management service, the user equipment management service comprises transmission of user equipment management data, and the first request message is used to request to establish a packet data unit PDU session for the user equipment management service;
configuring an internet protocol IP address of user equipment, a quality of service QoS flow identifier, and first indication information based on the first request message, and skipping establishing an N4 session, wherein the first indication information indicates an access network device to establish a user equipment management channel; and
sending a second request message, wherein the second request message is used to request resource information for establishing the PDU session, and the second request message comprises the IP address of the user equipment, the QoS flow identifier, and the first indication information.

2. A communication method, wherein the method is performed by an access network device, and the method comprises:
sending a first request message to a control plane network element of a core network, wherein the first request message comprises a first identifier, the first identifier indicates a user equipment management service, the user equipment management service comprises transmission of user equipment management data, and the first request message is used to request to establish a packet data unit PDU session for the user equipment management service;
receiving a second request message from the control plane network element of the core network, wherein the second request message is used to request resource information for establishing the PDU session, the second request message comprises an internet protocol IP address of user equipment, a quality of service QoS flow identifier, and first indication information, and the first indication information indicates the access network device to establish the user equipment management channel;
assigning a data radio bearer identifier DRB ID based on the second request message; and
constructing user equipment management channel information based on the first indication information, wherein the user equipment management channel information comprises a correspondence between the IP address of the user equipment and the QoS flow identifier, a correspondence between an IP address of an element management system EMS and the QoS identifier, and a correspondence between an IP address of the DRB and the QoS flow identifier.

3. The method according to claim 2, wherein the access network device comprises a central unit-control plane CU-CP and a central unit-user plane CU-UP; and
correspondingly, the method further comprises:
sending, by the CU-CP, the first request message to the control plane network element of the core network;
receiving, by the CU-CP, the second request message from the control plane network element of the core network;
sending, by the CU-CP, a third request message to the CU-UP, wherein the third request message comprises the IP address of the user equipment, the QoS flow identifier, and the first indication information;
configuring, by the CU-UP, the DRB ID based on the third request message; and
constructing, by the CU-UP, the user equipment management channel information based on the first indication message.

4. The method according to claim 2 or 3, wherein the method further comprises:
receiving uplink user equipment management data from the user equipment by using the DRB;
sending the uplink user equipment management data to the EMS based on the user equipment management channel information;
receiving downlink user equipment management data from the EMS; and
sending the downlink user equipment management data to the user equipment by using the DRB.

5. A communication method, wherein the method is performed by an access network device, and the method comprises:
receiving first request information, device identification information of user equipment, and registration information of the user equipment, wherein the first request information is used to request a registration procedure of the user equipment;
establishing a correspondence between an identifier ID of the user equipment and an IP address of an element management system EMS based on the first request information and the device identification information of the user equipment; and
sending the first request information, the registration information of the user equipment, and an IP address of the access network device to the EMS.

6. The method according to claim 5, wherein the registration information of the user equipment comprises any one of the following: encapsulated registration information of the user equipment, information element parameter information of the user equipment, or an information element parameter container of the user equipment.

7. The method according to claim 5 or 6, wherein the access network device comprises a central unit-control plane CU-CP and a distributed unit DU; and
correspondingly, the method further comprises:
receiving, by the DU, the first request information, the device identification information of the user equipment, and the registration information of the user equipment from the user equipment;
sending, by the DU, a first transfer message to the CU-CP, wherein the first transfer message comprises the first request information, the device identification information of the user equipment, and the registration information of the user equipment;
establishing, by the CU-CP, the correspondence between the ID of the user equipment and the IP address of the EMS based on the first request information and the device identification information of the user equipment; and
sending, by the CU-CP, the first request information, the registration information of the user equipment, and an IP address of the CU-CP to the EMS.

8. The method according to any one of claims 5 to 7, wherein the method further comprises:
receiving uplink user equipment management data from the user equipment by using a signaling radio bearer SRB;
sending the uplink user equipment management data to the EMS based on the correspondence between the ID of the user equipment and the IP address of the EMS;
receiving downlink user equipment management data from the EMS; and
sending the downlink user equipment management data to the user equipment by using the SRB.

9. A communication method, wherein the method is performed by an element management system EMS, and the method comprises:
receiving first request information, registration information of user equipment, and an internet protocol IP address of an access network device, wherein the first request information is used to request a registration procedure of the user equipment; and
registering the user equipment based on the first request information.

10. The method according to claim 9, wherein the IP address of the access network device comprises an IP address of a central unit-control plane CU-CP.

11. The method according to claim 9 or 10, wherein the method further comprises:
receiving uplink user equipment management data from the access network device;
recording a correspondence between an identifier ID of the user equipment and an ID of the access network device;
performing a user equipment management service based on the uplink user management data; and
sending downlink user equipment management data to the access network device based on the correspondence between the ID of the user equipment and the ID of the access network device.

12. A communication apparatus, wherein the apparatus comprises:
a receiving module, configured to receive a first request message, wherein the first request message comprises a first identifier, the first identifier indicates a user equipment management service, the user equipment management service comprises transmission of user equipment management data, and the first request message is used to request to establish a packet data unit PDU session for the user equipment management service;
a configuration module, configured to: configure an interconnect protocol IP address of user equipment, a quality of service QoS flow identifier, and first indication information based on the first request message, and skip establishing an N4 session, wherein the first indication information indicates an access network device to establish the user equipment management channel; and
a sending module, configured to send a second request message, wherein the second request message is used to request resource information for establishing the PDU session, and the second request message comprises the IP address of the user equipment, the QoS flow identifier, and the first indication information.

13. A communication apparatus, wherein the apparatus comprises:
a sending module, configured to send a first request message to a control plane network element of a core network, wherein the first request message comprises a first identifier, the first identifier indicates a user equipment management service, the user equipment management service comprises transmission of user equipment management data, and the first request message is used to request to establish a packet data unit PDU session for the user equipment management service;
a receiving module, configured to receive a second request message from the control plane network element of the core network, wherein the second request message is used to request resource information for establishing the PDU session, the second request message comprises an internet protocol IP address of user equipment, a quality of service QoS flow identifier, and first indication information, and the first indication information indicates an access network device to establish the user equipment management channel;
an assigning module, configured to assign a data radio bearer identifier DRB ID based on the second request message; and
a processing module, configured to construct user equipment management channel information based on the first indication information, wherein the user equipment management channel information comprises a correspondence between the IP address of the user equipment and the QoS flow identifier, a correspondence between an IP address of an element management system EMS and the QoS identifier, and a correspondence between an IP address of the DRB and the QoS flow identifier.

14. The apparatus according to claim 13, wherein the apparatus further comprises a central unit-control plane CU-CP and a central unit-user plane CU-UP; and
the CU-CP is configured to send the first request message to the control plane network element of the core network;
the CU-CP is further configured to receive the second request message from the control plane network element of the core network;
the CU-CP is further configured to send a third request message to the CU-UP, wherein the third request message comprises the IP address of the user equipment, the QoS flow identifier, and the first indication information;
the CU-UP is configured to configure the DRB ID based on the third request message; and
the CU-UP is further configured to construct the user equipment management channel information based on the first indication message.

15. The apparatus according to claim 13 or 14, wherein the receiving module is further configured to receive uplink user equipment management data from the user equipment by using the DRB;
the sending module is further configured to send the uplink user equipment management data to the EMS based on the user equipment management channel information;
the receiving module is further configured to receive downlink user equipment management data from the EMS; and
the sending module is further configured to send the downlink user equipment management data to the user equipment by using the DRB.

16. A communication apparatus, wherein the apparatus comprises:
a receiving module, configured to receive first request information, device identification information of user equipment, and registration information of the user equipment, wherein the first request information is used to request a registration procedure of the user equipment;
a processing module, configured to establish a correspondence between an identifier ID of the user equipment and an IP address of an element management system EMS based on the first request information and the device identification information of the user equipment; and
a sending module, configured to send the first request information, the registration information of the user equipment, and an IP address of the access network device to the EMS.

17. The apparatus according to claim 16, wherein the registration information of the user equipment comprises any one of the following: encapsulated registration information of the user equipment, information element parameter information of the user equipment, or an information element parameter container of the user equipment.

18. The apparatus according to claim 16 or 17, wherein the apparatus further comprises a central unit-control plane CU-CP and a distributed unit DU; and
the DU is configured to receive the first request information, the device identification information of the user equipment, and the registration information of the user equipment from the user equipment;
the DU is further configured to send a first transfer message to the CU-CP, wherein the first transfer message comprises the first request information, the device identification information of the user equipment, and the registration information of the user equipment;
the CU-CP is configured to establish the correspondence between the ID of the user equipment and the IP address of the EMS based on the first request information and the device identification information of the user equipment; and
the CU-CP is further configured to send the first request information, the registration information of the user equipment, and an IP address of the CU-CP to the EMS.

19. The apparatus according to any one of claims 16 to 18, wherein the receiving module is further configured to receive uplink user equipment management data from the user equipment by using a signaling radio bearer SRB;
the sending module is further configured to send the uplink user equipment management data to the EMS based on the correspondence between the ID of the user equipment and the IP address of the EMS;
the receiving module is further configured to receive downlink user equipment management data from the EMS; and
the sending module is further configured to send the downlink user equipment management data to the user equipment by using the SRB.

20. A communication apparatus, wherein the apparatus comprises:
a receiving module, configured to receive first request information, registration information of user equipment, and an internet protocol IP address of an access network device, wherein the first request information is used to request a registration procedure of the user equipment; and
a registration module, configured to register the user equipment based on the first request information.

21. The method according to claim 20, wherein the IP address of the access network device comprises an IP address of a central unit-control plane CU-CP.

22. The apparatus according to claim 20 or 21, wherein the receiving module is further configured to receive uplink user equipment management data from the access network device;
the processing module is further configured to record a correspondence between an identifier ID of the user equipment and an ID of the access network device;
the processing module is further configured to perform a user equipment management service based on the uplink user management data; and
the sending module is further configured to send downlink user equipment management data to the access network device based on the correspondence between the ID of the user equipment and the ID of the access network device.

23. A communication apparatus, comprising a memory and a processor, wherein
the memory is configured to store program instructions; and
the processor is configured to invoke the program instructions in the memory to perform the method according to any one of claims 1 to 11.

24. A chip, comprising at least one processor and a communication interface, wherein the communication interface and the at least one processor are interconnected through a line, and the at least one processor is configured to run a computer program or instructions, to perform the method according to any one of claims 1 to 11.

25. A computer-readable medium, wherein the computer-readable medium stores program code to be executed by a computer, and the program code comprises instructions used to perform the method according to any one of claims 1 to 11.
